(19) Europäisches Patentamt

European Patent Office

Office européen des brevets

(11) **EP 0 937 730 B1**

(12) **EUROPÄISCHE PATENTSCHRIFT**

(45) Veröffentlichungstag und Bekanntmachung des Hinweises auf die Patenterteilung:
**30.08.2000 Patentblatt 2000/35**

(51) Int Cl.$^7$: **C07F 7/10**

(21) Anmeldenummer: **98121577.5**

(22) Anmeldetag: **19.11.1998**

(54) **Verfahren zur Herstellung von silylierten Carbonsäureamiden**

Process for preparing silylated carboxylic acid amides

Procédé de préparation d'amides d'acides carboxyliques silylés

(84) Benannte Vertragsstaaten:
**CH DE FR GB IT LI**

(30) Priorität: **19.02.1998 DE 19807021**

(43) Veröffentlichungstag der Anmeldung:
**25.08.1999 Patentblatt 1999/34**

(73) Patentinhaber: **Wacker-Chemie GmbH**
**81737 München (DE)**

(72) Erfinder:
• **Winterfeld, Jörn, Dr.**
**84489 Burghausen (DE)**
• **Loskot, Stephan, Dr.**
**84556 Kastl (DE)**
• **Menzel, Hartmut, Dr.**
**84489 Burghausen (DE)**
• **Reitmeier, Rudolf, Dr.**
**84489 Burghausen (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**DE-A- 3 443 960 DE-A- 3 443 961**
**US-A- 3 397 220**

**Beschreibung**

Die Erfindung betrifft ein Verfahren zur Herstellung von silylierten Carbonsäureamiden.

Die Acylierung von Hexamethyldisilazan zu silylierten Carbonsäureamiden mit Keten wurde zwar in der Literatur beschrieben (W.W. Limburg et al., Rec. Trav. Chim. 81 (1962), 430), hat aber für die praktische Anwendung aufgrund schwerer Kontrollierbarkeit der Reaktion und schlechter Produktausbeuten, keine Bedeutung erlangt.

Ein gängiges Verfahren zur Herstellung einfach silylierter Carbonsäureamide, wie den Trimethylsilylcarbonsäureamiden ($RC(O)NH[Si(CH_3)_3]$ mit R = Organyl), basiert auf der Reaktion des entsprechenden Säureamids mit Hexamethyldisilazan (G. Schirawski et al., Monatsh. Chem. 100 (1969),1901). Als störende Nebenprodukte fallen jedoch hierbei auch Verbindungen mit Triazinstruktur an.

Außerdem ist in der wissenschaftlichen Literatur die Umsetzung von Carbonsäurechloriden ($RC(O)Cl$ mit R = Me, Et, Ph) mit Hexamethyldisilazan in einem unpolaren Lösemittel zu den entsprechenden N-Trimethylsilylcarbonsäureamiden beschrieben (J.R. Bowser et al., J. Org. Chem. 48 (1983), 4111-4113). Die dort angegebenen Ausbeuten sind aber tatsächlich viel geringer und es treten ebenfalls eine Reihe unerwünschter Nebenprodukte auf (DE 34 43 961).

Zur Herstellung von persilylierten Carbonsäureamiden, wie dem N,N- bzw. N,O-Bistrimethylsilylacetamid ($CH_3C(O)N[Si(CH_3)_3]_2$ bzw. $CH_3C[-OSi(CH_3)_3][=NSi(CH_3)_3]$), gibt es bisher zwei gängige Verfahren. Dem einen liegt die Reaktion von Acetamid mit zwei Äquivalenten Trimethylchlorsilan in Anwesenheit von tertiärem Amin zugrunde (US 3,397,220), und das andere geht von Acetanhydrid aus, welches zunächst mit Hexamethyldisilazan und dann mit Trimethylchlorsilan und tertiärem Amin umgesetzt wird (DE 34 43 961). Beide Synthesen weisen aber entscheidende Nachteile auf. Während bei dem erstgenannten Syntheseweg als Nebenanfall erhebliche Feststoffmengen von zwei Äquivalenten Amin-Hydrochlorid auftreten, was zu großen Schwierigkeiten bei der Isolierung des Produkts in hohen Ausbeuten und Reinheit führt, fällt bei dem zweiten Syntheseweg ein Äquivalent nicht nutzbare silylierte Carbonsäure an.

Des weiteren sind in die Patentliteratur Herstellungsverfahren für N,N- bzw. N,O-Bistrimethylsilylacetamid allerdings bereits ausgehend vom einfach silylierten Acetamid durch Umsetzung mit N-Trimethylsilylimidazol sowie einiger seiner Derivate (DE 29 23 604; Chem. Abstr. 109. 129294x; Chem. Abstr. 121. 230353p) eingegangen.

Aufgabe der Erfindung ist es, die Nachteile des Standes der Technik zu überwinden und ein einfaches sowie insbesondere wirtschaftliches Verfahren zur Herstellung von silylierten Carbonsäureamiden zur Verfügung zu stellen.

Gegenstand der Erfindung ist ein Verfahren zur Herstellung von silylierten Carbonsäureamiden, das dadurch gekennzeichnet ist, daß ein Carbonsäurehalogenid mit einem Disilazan in Anwesenheit einer Carbonylgruppen-aktivierenden zum N-Triorganylsilylcarbonsäureamid umgesetzt wird.

Gegebenenfalls läßt sich das silylierte Carbonsäureamid direkt aus dem Reaktionsgemisch, d.h. ohne Isolierung von Zwischenprodukten, durch Zusatz eines tertiären Amins, bei nicht-enolisierbaren silylierten Carbonsäuren außerdem durch Zusatz einer stark basischen Alkalimetall- oder Erdalkalimetallverbindung oder durch Zugabe einer Silylgruppen-übertragenden Verbindung zum zweifach silylierten Carbonsäureamid umsetzen.

Die Herstellung der silylierten Carbonsäureamide verläuft vor-zugsweise gemäß der nachfolgend aufgeführten Reaktionsgleichung:

$$(1) \qquad R^1COX + HN[SiR^2_3]_2 \rightarrow R^1CONH[SiR^2_3] + XSiR^2_3,$$

wobei eine Carbonylgruppen-aktivierenden Verbindung verwendet wird.

$R^1$ kann einen fluorierten oder nicht fluorierten Alkylrest, wie der Trifluormethyl-, Difluormethyl-, Fluormethyl-, 1,1,1-Trifluorpropyl-, Methyl-, Ethyl-, n-Propyl-, Isopropyl-, n-Butyl-, sec.-Butyl- oder tert.-Butylrest, oder einen fluorierten oder nicht fluorierten Arylrest, wie der Pentafluorphenyl-, Phenyl- oder Xenylrest,
und $R^2$ Methyl-, n-Octyl, Phenyl oder Vinylrest bedeuten.
X steht für die Halogenide Fluorid, Chlorid, Bromid und Jodid.

Bei den Carbonsäurehalogeniden handelt es sich vor-zugsweise um die Chlorid, wie bevorzugt Acetylchlorid, Propionsäurechlorid, Buttersäurechlorid, Isobuttersäurechlorid, Benzoesäurechlorid, Trifluoracetylchlorid, 4,4,4-Trifluorbuttersäurechlorid und Perfluorbenzoesäurechlorid oder deren Fluoride, Bromide und Iodide, bevorzugt um Acetylfluorid, Propionsäurefluorid, Acetylbromid und Benzoesäurebromid.

Als Disilazane können vorzugsweise Hexamethyldisilazan, 1,3-Di-n-octyltetramethyldisilazan, 1,3-Divinyltetramethyldisilazan, 1,3-Divinyl-1,3-diphenyl-1,3-dimethyldisilazan, 1,1,3,3-Tetraphenyldimethyldisalazan und Heptamethydisilazan verwendet werden, wobei Hexamethyldisialzan bevorzugt ist.

Eine hohe Ausbeute und Reinheit an silyliertem Carbonsäureamid erfordert eine Aktivierung des Carbonsäurehalogenids. Dies erfolgt mit Carbonylgruppen-aktivierenden Verbindungen. Als Carbonylgruppen-aktivierende Verbindungen können vorzugsweise aromatische Stickstoffheterozyklen, wie Pyridin, 2-Methylpyridin, 3-Methylpyridin, 4-Methylpyridin, 2-Ethylpyridin, N,N-Dimethyl-4-pyridinamin, 4-(1-Pyrrolidinyl)pyridin, 2,6-Dimethylpyridin, 3,5-Dimethylpyridin, 5-Ethyl-2-methylpyridin, 2,2'-Bipyridin, Pyrimidin, Pyrazin, Chinolin, 2-Methylchinolin, 4-Methylchinolin, N-Methylimidazol, N-n-Butylimidazol, N-Phenylimidazol, N-Benzylimidazol oder N-Phenylpyrazol, oder N,N-disubstituierte Amide, wie Propionsäure-N,N-dimethylamid, Propionsäure-N,N-diethylamid, Dodecansäure-N,N-diethylamid, 1,3-Dimethyl-2-imidazolidinon, 1,3-Dimethyltetrahydro-2-pyrimidinon, N-Methylcaprolactam, 3-Methyl-2-oxazolidinon oder N-Methyl-2-pyrrolidinon, oder tertiäre Phosphane, wie Tri-n-propylphosphan, Tri-n-butylphosphan, Triphenylphosphan, Dimethylphenylphosphan, 1,2-Bis(dimethylphosphano)ethan oder Bis(dimethylphosphano)methan, oder tertiäre Phosphinoxide, wie Tri-n-butylphosphinoxid oder Triphenylphosphinoxid, oder tertiäre Phosphorsäureester, wie Phosphorsäuretrimethylester, Phosphorsäuretriethylester, Phosphorsäuretri-n-butylester oder Phosphorsäuretriphenylester, oder nicht-enolisierbaren Ketone, wie Benzophenon, 9-Fluorenon, Anthron oder Dibenzosuberon, eingesetzt werden.

Eine aktivierende Wirkung zeigt auch der Zusatz eines Ethylenglykoldialkylethers, wie vorzugsweise Triethylenglykoldimethylether oder Tetraethylenglykoldimethylether. Diese Verbindungen können einzeln oder in Gemischen zugesetzt werden, gegebenenfalls in Kombination mit einer starken Säure, wie konzentrierter Schwefelsäure, p-Toluolsulfonsäure oder Trifluormethansulfonsäure.

Das Disilazan und das Carbonsäurehalogenid werden im Molverhältnis von 1 : 1 bis 3 : 1, bevorzugt im Verhältnis 1 : 1, miteinander umgesetzt.

Im Fall der Carbonylgruppen-Aktivierung durch einen aromatischen Stickstoffheterozyklus, ein tertiäres Phosphan, ein tertiäres Phosphinoxid, einen tertiären Phosphosäureester oder ein nicht-enolisierbares Keton wird die aktivierende Verbindung in einer Menge von 1 - 50 Mol-%, bezogen auf das Carbonsäurechlorid, bevorzugt in einer Menge von 10 - 30 Mol-%, zugesetzt.

Im Fall der Carbonylgruppen-Aktivierung durch einen Ethylenglykoldialkylether wird dieser in einer Menge von 0,1 - 2,0 Äquivalenten (Mol), bezogen auf das Carbonsäurehalogenid, bevorzugt in einer Menge von 1 - 1,5 Äquivalent zugesetzt. Gegebenenfalls erfolgt der Zusatz in Kombination mit 0,1 - 10,0 Mol-%, bevorzugt mit 1 - 5 Mol-%, einer starken Säure, bezogen auf das Carbonsäurechlorid.

Die erfindungsgemäße Reaktion kann ohne Verwendung eines zusätzlichen Lösungsmittels und in der Regel bei einer Temperatur zwischen -20°C und 60°C, vorzugsweise bei 0°C - 40°C, erfolgen. Lösungsmittel wie beispielsweise unpolare Alkane sind also nicht notwendig, aber auch nicht störend.

Die bevorzugten Produkte der Reaktion (1) sind N-Trimethylsilylacetamid, N-Trimethylsilylpropionamid, N-Trimethylsilylbutyramid, N-Trimethylsilylisobutyramid, N-Trimethylsilylbenzamid, N-Trimethylsilyltrifluoracetamid, N-Trimethylsilyl-4,4,4-trifluorbutyramid sowie N-Trimethylsilylperfluorbenzamid.

Zur Herstellung der zweifach silylierten Carbonsäureamide kann erfindungsgemäß das Produktgemisch vorzugsweise aus Reaktion (1) unter Zugabe von vorzugsweise 1 - 3 Äquivalenten (Mol) einer Base (B), bevorzugt eines tertiären Amins, wie Triethylamin, Tri-n-butylamin, N-Ethyldiisopropylamin oder N,N,N',N'-Tetramethylethylendiamin, bei einer Temperatur zwischen vor-zugsweise 20°C und 90°C umgesetzt werden. Ein Überschuß an tertiärem Amin dient als Verdünnungsmittel, um eine gute Rührbarkeit der Reaktionsmischung durch ausfallendes tertiäres Amin-Hydrohalogenid zu gewährleisten. Obwohl bei der Reaktion (1) die stöchiometrische Menge Triorganylhalogensilan $(XSiR^2_3)$ gebildet wird, kann es zur Ausbeutesteigerung vorteilhaft sein, einen Überschuß, bevorzugt bis zu 0,5 Äquivalente (Mol), bezogen auf das Carbonsäurehalogenid, Triorganylhalogensilan zuzugeben. Nach Abtrennung des ausgefallenen tertiären Amin-Hydrohalogenids wird das Produkt durch Destillation in sauberer Qualität, wie es für Pharmasynthesen notwendig und üblich ist, erhalten.

$$(2aa) \qquad R^1CONH[SiR^2_3] + XSiR^2_3 + B \rightarrow R^1CON[SiR^2_3]_2 + B\ HX,$$

wobei X, $R^1$ und $R^2$ die voranstehenden Bedeutungen haben und B Base bedeutet.

Die bevorzugten Produkte der Reaktion (1) in Kombination mit Reaktion (2aa) sind N,N- bzw. N,O-Bistrimethylsilylacetamid, N,N- bzw. N,O-Bistrimethylsilylpropionamid, N,N- bzw. N,O-Bistrimethylsilylbutyramid, N,N- bzw. N,O-Bistrimethylsilylisobutyramid, N,N- bzw. N,O-Bistrimethylsilylbenzamid und N,N- bzw. N,O-Bistrimethylsilyltrifluoracetamid.

Bei nicht enolisierbaren N-Triorganylsilylcarbonsäureamiden, wie dem N-Trimethylsilyltrifluoracetamid, dem N-Trimethylsilylbenzamid oder dem N-Trimethylsilylperfluorbenzamid, kann das Produktgemisch aus Reaktion (1) erfindungsgemäß unter Zugabe eines Äquivalents (Mol) einer stark basischen Alkalimetall- oder Erdalkalimetallverbindung $(MR^3)$, wie Lithiumhydrid, Natriumhydrid, Methyllithium, n-Butyllithium, Grignard-Verbindungen wie Methylmagnesiumchlorid oder Natriumamid bei einer Temperatur bevorzugt zwischen -40°C und 50°C umgesetzt werden. Zur Ausbeutesteigerung kann es auch bei dieser Reaktion vorteilhaft sein, bis zu 0,5 Äquivalente (Mol) weiteres Triorganylhalogensilan, bezogen auf das Carbonsäurechlorid, zuzugeben. Ausbeutesteigernd wirken auch Etherzusätze, wie Di-n-butylether, Diethylether, tert.-Butylmethylether, Tetrahydrofuran oder Dimethoxyethan, die üblicherweise in einer Menge von 0,5 - 2,0 Äquivalenten (Mol) bezogen auf die stark basische Metallverbindung mit hinzugegeben werden. Nach Abtrennung des ausgefallenen Alkalimetallhalogenids oder Erdalkalimetallhalogenids wird das Produkt durch Destillation in reiner Form erhalten.

$$(2ab) \qquad R^1CONH[SiR^2{}_3] + XSiR^2{}_3 + MR^3 \rightarrow R^1CON[SiR^2{}_3]_2 + MX + R^3H,$$

wobei M Alkali- und Erdalkalimetall, $R^3$ vorzugsweise Hydrid, Methyl, n-Butyl, tert.-Butyl oder Amid bedeutet und $R^2$ sowie X die voranstehende Bedeutung haben. $R^1$ ist in diesem Fall vor-zugsweise auf den Trifluormethyl-, Phenyl- und Perfluorphenylrest beschränkt. Die bevorzugten Produkte sind demnach N,N-bzw. N,O-Bistrimethylsilylbenzamid, N,N- bzw. N,O-Bistrimethylsilyltrifluoracetamid und N,N- bzw. N,O-Bistrimethylsilylperfluorbenzamid.

Alternativ kann das zweifach silylierte Carbonsäureamid aus dem Produktgemisch der Reaktion (1) erfindungsgemäß durch Umsetzung mit einer geeigneten Triorganylsilylgruppen-enthaltenden Verbindung ($R^4SiR^2{}_3$) hergestellt werden. Geeignete Verbindungen zur Übertragung von Trimethylsilylgruppen auf die N-Trimethylsilylcarbonsäureamide sind aromatische N-Trimethylsilylstickstoffheterozyklen, aber auch tertiäre N-Trimethylsilylamine (Gleichung (2b)). Beispiele für aromatische N-Trimethylsilylstickstoffheterozyklen sind N-Trimethylsilylpyrazol, N-Trimethylsilyl-3-methylpyrazol, N-Trimethylsilyl-4-methylpyrazol, N-Trimethylsilyl-2,5-dimethylpyrazol, N-Trimethylsilylimidazol, N-Trimethylsilyl-2-methylimidazol, N-Trimethylsilyl-4(5)-methylimidazol oder N-Trimethylsilyl-1,2,4-triazol und für tertiäre N-Trimethylsilylamine N-Trimethylsilylpyrrolidin oder N-Trimethylsilyldiethylamin.

$$(2b) \qquad R^1CONH[Si(CH_3)_3] + R^4Si(CH_3)_3 \rightarrow R^1C(O)N[Si(CH_3)_3]_2 + R^4H,$$

wobei $R^4$ für den Pyrazol-, 3-Methylpyrazol-, 4-Methylpyrazol-, 2,5-Dimethylpyrazol-, Imidazol-, 2-Methylimidazol-, 4(5)-Methylimidazol-, 1,2,4-Triazol-, Pyrrolidin- oder Diethylaminrest steht und $R^1$ die voranstehende Bedeutung hat.

Im allgemeinen wird das zweifach silylierte Carbonsäureamid destillativ im Maße seiner Bildung aus dem Reaktionsgemisch entfernt.

Die bevorzugten Produkte dieser erfindungsgemäßen Reaktion sind dieselben wie bei Reaktion (2aa).

Einfach silylierte Carbonsäureamide lassen sich aber auch erfindungsgemäß durch andere N,N- bzw. N,O-Bistriorganylsilylcarbonsäureamide weiter silylieren, wie das Beispiel der Umsetzung von N-Trimethylsilyltrifluoracetamid mit N,N- bzw. N,O-Bistrimethylsilylacetamid zum Produkt N,N- bzw. N,O-Bistrimethylsilyltrifluoracetamid zeigt.

$$(2c) \qquad CF_3CONH[Si(CH_3)_3] + CH_3CON[Si(CH_3)_3]_2 \rightarrow CH_3CONH[Si(CH_3)_3] + CF_3CON[Si(CH_3)_3]_2.$$

Die nach dem erfindungsgemäßen Verfahren hergestellten silylierten Carbonsäureamide finden insbesondere bei der Silylierung von organischen Verbindungen für synthetische (Pharmzeutika) und analytische Zwecke, aber auch bei speziellen Silylierungen von organischen und anorganischen Oberflächen Anwendung.

Vorteile dieses Verfahrens sind, daß es Umsetzungen in hohen Ausbeuten und hoher Reinheit bei niedrigen Temperaturen und kurzer Reaktionszeit erlaubt.

**Beispiele:**

Beispiel 1

a.) In einem 41-Dreihalskolben mit KPG-Rührer, Tropftrichter, Innenthermometer, Anschütz-Aufsatz und Rückflußkühler mit Argon-Begasung werden 581,0 g (3,6 Mol) Hexamethyldisilazan und 23,7 g (0,3 Mol) Pyridin vorgelegt. Zu dieser Lösung werden 235,5 g (3,0 Mol) Acetylchlorid unter Wasserbadkühlung über 65 min. getropft. Beim Zutropfen steigt die Innentemperatur auf ca. 40°C an und die Reaktionslösung wird trübe. Nach vollständiger Zugabe des Acetylchlorids wird weitere 30 min. bei Raumtemperatur gerührt. Anschließend wird zunächst ein halbes Äquivalent Trimethylchlorsilan, 163,0 g (1,5 Mol), zugemischt, und dann werden 607,1 g (6,0 Mol) Triethylamin über 15 min. zudosiert, wobei die Innentemperatur des Kolbens auf ca. 50°C ansteigt. Nach erfolgter Zugabe wird die Reaktion durch einstündiges Erhitzen auf 80°C komplettiert und die Suspension dann auf Raumtemperatur abgekühlt. Das Triethylamin-Hydrochlorid wird mit Hilfe einer Argon-inertisierten Drucknutsche abgetrennt, der Filterkuchen zweimal mit 250 ml Triethylamin gespült und das klare Filtrat schließlich über eine Füllkörperkolonne fraktioniert destilliert. Die Destillation liefert eine Ausbeute von 549,3 g (90% d. Th. (d.Th. bedeutet der Theorie)) an N,N- bzw. N,O-Bistrimethylsilylacetamid mit 92% Reinheit nach GC (GC bedeutet Gaschromatographie), Kp. bei 55 mbar: 75-76°C.

b.) Gemäß der unter a.) beschriebenen Arbeitsweise werden jeweils 78,50 g (1,0 Mol) Acetylchlorid, 92,52 g (1,0 Mol) Propionsäurechlorid bzw. 106,55 g (1,0 Mol) Buttersäurechlorid mit einem Gemisch aus 193,68 g (1,2 Mol) Hexamethyldisilazan und 7,91 g (0,1 Mol) Pyridin umgesetzt. Unter vermindertem Druck (50 mbar) und leichter Erwärmung (40-50°C) werden zunächst die flüchtigen Bestandteile der Reaktionsmischung, wie das Trimethylchlorsilan oder überschüssiges Hexamethyldisilazan, entfernt und der Rückstand über eine kurze Kolonne fraktioniert destilliert. Angaben über die Ausbeute, den Gehalt sowie den Siedepunkt der entsprechenden N-Trimethylsilylcarbonsäureamide befinden sich in Tabelle 1. Zum Vergleich werden diese Versuche wiederholt mit der Abänderung, daß kein Pyridin als Aktivator/Katalysator mitverwendet wird.

Tabelle 1

| Carbonsäurechlorid | Pyridin- Zusatz [Mol-%][1] | N-Trimethylsilylcarbonsäureamid | | |
|---|---|---|---|---|
| | | Ausbeute [%] | Gehalt[2] [Mol-%] | Kp. [°C/mbar] |
| Actylchlorid | 10 | 95[3] | 97 | 83/14 |
| | -[4] | 5[5] | | |
| Propionsäurechlorid | 10 | 97[3] | 97 | 125/100 |
| | -[4] | 57[3] | 81 | |
| Buttersäurechlorid | 10 | 98[3] | 95 | 100/20 |
| | -[4] | 23[3] | 73 | |

[1]bezogen auf das Säurechlorid

[2] aus $^1$H- und $^{29}$Si-NMR.

[3]isolierte Ausbeute

[4] Vergleichsversuche (nicht erfindungsgemäß)

[5] nicht destilliert, Ausbeute mittels $^1$H- und $^{29}$Si-NMR im Rückstand bestimmt.

c.) Zum Screening weiterer Katalysatoren wird Beispiel 1 a.) mit der Abänderung wiederholt, daß anstelle von Pyridin andere aromatische Heterozyklen, N,N-disubstituierte Amide, Phosphorverbindungen sowie nicht-enolisierbare Ketone zugesetzt werden. Die Ergebnisse dieser Untersuchungen sind in der Tabelle 2 zusammengefaßt.

Tabelle 2

| Katalysator[1] | N,N- bzw. N,O- Bistrimethylsilylacetamid |
|---|---|
| | Ausbeute [%][2] |
| Triethylamin[3] | -[4] |
| • aromatische Heterozyklen | |
| 2,6-Dimethylpyridin | 86 |
| 2-Ethylpyridin | 50 |
| 3-Methylpyridin | 86 |
| N-Methylimidazol | 75 |
| • N,N-disubstituierte Amide | |
| 1,3-Dimethyl-2-imidazolidinon | 79 |
| 1,3-Dimethyltetrahydro-2- | 72 |

[1]10 Mol-% bezogen auf Acetylchlorid

[2]isolierte Ausbeute; Gehalt an N,N- bzw. N,O-Bistrimethylsilylacetamid ≥ 90 Mol-% ($^1$H- und $^{29}$Si-NMR)

[3]Vergleichsversuche (nicht erfindungsgemäß)

[4]Keten-Bildung

Tabelle 2   (fortgesetzt)

| Katalysator[1] | N,N- bzw. N,O- Bistrimethylsilylacetamid |
|---|---|
| • *N,N-disubstituierte Amide* | |
| pyrimidinon | |
| 3-Methyl-2-oxazolidinon | 81 |
| N-Methyl-2-pyrrolidinon | 81 |
| • *tertiäre Posphane* | |
| Tri-n-butylphosphan | 88 |
| Triphenylphosphan | 87 |
| • *tertiäre Phosphinoxide* | |
| Triphenylphsophinoxid | 76 |
| • *tertiäre Phosphorsäureester* | |
| Phosphorsäuretriethylester | 87 |
| Phosphorsäuretri-n-butylester | 85 |
| Phosphorsäuretriphenylester | 82 |
| • *nicht-enolisierbare Ketone* | |
| Benzophenon | 55 |

[1]10 Mol-% bezogen auf Acetylchlorid

Beispiel 2

Gemäß der in Beispiel 1 a.) beschriebenen Arbeitsweise werden zunächst 581,0 g (3,6 Mol) Hexamethyldisilazan und 235,5 g (3,0 Mol) Acetylchlorid umgesetzt mit den Abänderungen, daß anstelle von Pyridin ein Äquivalent Triethylenglykoldimethyl ether, 534,7 g (3,0 Mol), eingesetzt wird und das Acetylchlorid kurz vor dem Zutropfen zum Hexamethyldisilazan mit 1 Mol-% Trifluormethansulfonsäure, 4,5 g (0,03 Mol), aktiviert wird. Der zweite Silylierungsschritt, die Umsetzung mit Trimethylchlorsilan, 163,0 g (1,5 Mol), und Triethylamin, 607,1 g (6,0 Mol), läuft völlig analog zu der in Beispiel 1 a.) beschriebenen Arbeitsweise. Die isolierte Ausbeute an N,N- bzw. N,O-Bistrimethylsilylacetamid (92% Reinheit nach GC) beträgt 500,4 g (82% d.Th.).
Der bei der Destillation zurückgebliebene Sumpf enthält im wesentlichen Triethylenglykoldimethylether und etwas N-Trimethylsilylacetamid und kann für den jeweils nächsten Ansatz wieder eingesetzt werden.

Beispiel 3

a.) In einem 250 ml-Dreihalskolben mit Gaseinleitungsrohr, KPG-Rührer, Anschütz-Aufsatz, Innenthermometer und Rückflußkühler mit Argon-Begasung werden 80,6 g (0,5 Mol) Hexamethyldisilazan und 3,96 g (0,05 Mol) Pyridin bei 3°C vorgelegt und unter Rühren 66,2 g (0,5 Mol) gasförmiges Trifluoracetylchlorid über 60 min. eingeleitet. Dabei steigt die Innentemperatur leicht an. Nach vollständiger Zugabe des Trifluoracetylchlorids wird das Kältebad entfernt und man läßt auf Raumtemperatur erwärmen. Bei dieser Temperatur wird zunächst ein halbes Äquivalent Trimethylchlorsilan, 27,2 g (0,25 Mol), zugemischt, und dann werden 101,2 g (1,0 Mol) Triethylamin über 30 min. zugetropft, wobei die Innentemperatur auf ca. 40°C ansteigt. Zur Vervollständigung der Reaktion wird 30 min. bei Raumtemperatur nachgerührt. Das ausgefallene Triethylamin-Hydrochlorid wird mit Hilfe einer Argon-inertisierten Drucknutsche entfernt, zweimal mit 25 ml Triethylamin gespült und das klare Filtrat anschließend über eine kurze Füllkörperkolonne destilliert. Die Destillation liefert eine Ausbeute von 123,6 g (96%d. Th.) an N,N- bzw. N,O-Bistrimethylsilyltrifluoracetamid mit einem Gehalt 93% (GC), Kp. bei 70 mbar: 60-65°C.
b.) Zum Vergleich wird die voranstehend unter 3 a.) beschriebene Arbeitsweise wiederholt mit der Abänderung, daß kein Pyridin als Katalysator mitverwendet wird. Die isolierte Asbeute an N,N- bzw. N,O-Bistrimethylsilyltrifluoracetamid liegt 18% unter der von a.).

Beispiel 4

Gemäß der in Beispiel 3 a.) beschriebenen Arbeitsweise werden 66,2 g (0,5 Mol) Trifluoracetylchlorid mit einem Gemisch aus 80,6 g (0,5 Mol) Hexamethyldisilazan und 3,96 g (0,05 Mol) Pyridin zu N-Trimethylsilyltrifluoracetamid und Trimethylchlorsilan umgesetzt. Zu dieser Reaktionsmischung werden zunächst 50 ml Diethylether gegeben, anschließend werden bei 0°C langsam 312,5 ml (0,5 Mol) einer 1,6 m n-Butyllithium-Lösung in n-Hexan zugetropft. Es wird über 1 h auf Raumtemperatur erwärmen gelassen, vom ausgefallenen Lithiumchlorid abfiltriert und die klare Lösung wird fraktioniert destilliert. N,N- bzw. N,O-Bistrimethylsilyltrifluoracetamid wird in einer Ausbeute von 104,2 g (81% d.Th.) mit einer Reinheit von 90% (GC) erhalten.

Beispiel 5

a.) Gemäß der in Beispiel 1 a.) beschriebenen Arbeitsweise werden 78,5 g (1,0 Mol) Acetylchlorid mit einem Gemisch aus 193,7 g (1,2 Mol) Hexamethyldisilazan und 7,9 g (0,1 Mol) Pyridin zu N-Trimethylsilylacetamid und Trimethylchlorsilan umgesetzt. Anschließend werden bei Raumtemperatur 210,4 g (1,5 Mol) N-Trimethylsilylimidazol zugemischt und der Reaktionskolben wird mit einer Destillationsvorrichtung, die mit einer Füllkörperkolonne (Länge von 40 cm / Durchmesser 3 cm) ausgestattet ist, versehen. Bei einem Druck von 100 mbar werden zunächst die leichter flüchtigen, recycelbaren Bestandteile, wie Trimthylchlorsilan, Pyridin und überschüssiges Hexamethyldisilazan, abgezogen, anschließend wird N,N- bzw. N,O-Bistrimethylsilylacetamid im Maße seiner Bildung über Kopf abdestilliert (Temperaturanstieg maximal 3-5°C). Nach 9 Stunden ist die Destillation beendet. Die Ausbeute an N,N- bzw. N,O-Bistrimethylsilylacetamid beträgt 150,5 g (74% d.Th.) mit 92% Reinheit (GC).

b.) Die vorstehend unter a.) beschriebene Arbeitsweise wird mit der Abänderung wiederholt, daß anstelle von N-Trimethysilylimidazol andere Silylierungsmittel verwendet werden. Die Ergebnisse dieser Untersuchungen sind in Tabelle 3 zusammengefaßt.

Tabelle 3

| Silylierungsmittel[1] | Dauer der Destillation[2] [h] | Ausbeute[3] [%] |
|---|---|---|
| N-Trimethylsilyl-2-methylimidazol | 8 | 80 |
| N-Trimethylsilyl-4(5)-methylimidazol | 8,5 | 75 |
| N-Trimethylsilyldimethylpyrazol | 14 | 72 |
| N-Trimethylsilyl-1,2,4-triazol | 19 | 73 |

[1] jeweils 1,5 Mol
[2] abzüglich der Zeit für die Destillation der Vorläufe
[3] N,N- bzw. N,O-Bistrimethylsilylacetamid-Gehalt beträgt ≥ 92% (GC)

Der nach der Destillation zurückgebliebene Sumpf enthält im wesentlichen den entsprechenden Stickstoffheterocyclus, der durch Zugabe von Hexamethyldisilazan und anschließendes Erhitzen unter Rückfluß wieder in den entsprechenden N-Trimethylsilylstickstoffheterocyclus überführt wird (Recycling).

Beispiel 6

Gemäß der in Beispiel 3 a.) beschriebenen Arbeitsweise werden zunächst 66,2 g (0,5 Mol) Trifluoracetylchlorid mit einem Gemisch aus 80,6 g (0,5 Mol) Hexamethyldisilazan und 3,96 g (0,05 Mol) Pyridin zu N-Trimethylsilyltrifluoracetamid und Trimethylchlorsilan umgesetzt. Anschließend werden zu dieser Reaktionsmischung bei Raumtemperatur über 20 min. 122,1 g (0,6 Mol) N,N- bzw. N,O-Bistrimethylsilylacetamid getropft und es wird dann 10 min nachgerührt. Eine fraktionierte Destillation liefert 126,1 g (98% d.Th.) mit einem Gehalt von 90% (GC) an N,N- bzw. N,O-Bistrimethylsilyltrifluoracetamid. Im Sumpf verbliebenes N-Trimethylsilylacetamid kann beispielsweise durch Reaktion mit N-Trimethylsilylimidazol oder Trimethylchlorsilan/Triethylamin wieder in das N,N- bzw. N,O-Bistrimethylsilylacetamid überführt und jeweils in den nächsten Ansatz wieder eingesetzt werden.

**Patentansprüche**

1.  Verfahren zur Herstellung von silylierten Carbonsäureamiden, dadurch gekennzeichnet, daß ein Carbonsäurehalogenid mit einem Disilazan in Anwesenheit einer Carbonylgruppen-aktivierenden Verbindung zum N-Triorganylsilylcarbonsäureamid umgesetzt wird.

2.  Verfahren zur Herstellung von silylierten Carbonsäureamiden nach Anspruch 1, dadurch gekennzeichnet, daß in Gegenwart einer Base weiter zum N,N- bzw. N,O-Bistriorganylsilylcarbonsäureamid umgesetzt wird.

3.  Verfahren zur Herstellung von silylierten Carbonsäureamiden nach Anspruch 1, dadurch gekennzeichnet, daß ein bei der Umsetzung von einem Carbonsäurehalogenid mit einem Disilazan entstehendes nicht enolisierbares N-Triorganylsilylcarbonsäureamid mit einer basischen Alkalimetallverbindung oder Erdalkalimetallverbindung weiter zum N,N- bzw. N,O-Bistriorganylsilylcarbonsäureamid umgesetzt wird.

4.  Verfahren zur Herstellung von silylierten Carbonsäureamiden nach Anspruch 1, dadurch gekennzeichnet, daß durch Zugabe einer Triorganylsilylgruppen-enthaltenden Verbindung weiter zum N,N- bzw. N,O-Bistriorganylsilylcarbonsäureamid umgesetzt wird.

**Claims**

1.  Process for the preparation of silylated carboxamides, characterized in that a carbonyl halide is reacted with a disilazane in the presence of a carbonyl group-activating compound to give the N-triorganylsilylcarboxamide.

2.  Process for the preparation of silylated carboxamides according to Claim 1, characterized in that further reaction to give the N,N- or N,O-bistriorganylsilylcarboxamide is carried out in the presence of a base.

3.  Process for the preparation of silylated carboxamides according to Claim 1, characterized in that a non-enolizable N-triorganylsilylcarboxamide formed in the reaction of a carbonyl halide with a disilazane is further reacted with a basic alkali metal compound or alkaline earth metal compound to give the N,N- or N,O-bistriorganylsilylcarboxamide.

4.  Process for the preparation of silylated carboxamides according to Claim 1, characterized in that further reaction to give the N,N- or N,O-bistriorganylsilylcarboxamide is carried out by addition of a compound containing triorganylsilyl groups.

**Revendications**

1.  Procédé de préparation de carboxamides silylés, caractérisé en ce qu'un halogénure de carbonyle est mis à réagir avec un disilazane en présence d'un composé activant les groupes carbonyle pour donner lieu à un N-triorganylsilylcarboxamide.

2.  Procédé de préparation de carboxamides silylés selon la revendication 1, caractérisé en ce que l'on fait davantage réagir en présence d'une base pour donner lieu à un N,N- ou N,O-bistriorganylsilylcarboxamide.

3.  Procédé de préparation de carboxamides silylés selon la revendication 1, caractérisé en ce qu'un N-triorganylsilylcarboxamide non énolisable formé lors de la réaction d'un halogénure de carbonyle avec un disilazane est en outre mis à réagir avec un composé de métal alcalin ou un composé de métal alcalino-terreux basique pour donner lieu à un N,N- ou N,O-bistriorganylsilylcarboxamide.

4.  Procédé de préparation de carboxamides silylés selon la revendication 1, caractérisé en ce que l'on fait davantage réagir pour donner lieu à un N,N- ou N,O-bistriorganylsilylcarboxamide, en ajoutant un composé renfermant des groupes triorganylsilyle.